# EUROPÄISCHE PATENTANMELDUNG

(11) **EP 1 933 229 A1**
(43) Veröffentlichungstag der Anmeldung: **18.06.2008**
(21) Anmeldenummer: 06025925.6
(22) Anmeldetag: 14.12.2006
(51) Int. Cl.: G06F 3/048

(54) **Verfahren und Vorrichtung zum Darstellen und Bedienen einer Bedienoberfläche auf einer Anzeige**

(71) Anmelder: BrainLAB AG, 85622 Feldkirchen (DE)
(72) Erfinder: Schwitzko, Ralf, 436931 Singapur (SG); Weissenborn, Anke, 80937 München (DE); Krüger, Peter, 85551 Kirchheim (DE)
(74) Vertreter: Gassenhuber, Andreas

(57) **Zusammenfassung**

Verfahren zum Darstellen und Bedienen einer Bedienoberfläche auf einer Anzeige, wobei ein Benutzer einen Zeiger auf der Anzeige ziehen oder bewegen kann und ein Aktivierungssignal eingeben kann, dadurch gekennzeichnet, dass nach Eingabe des Aktivierungssignals ein Bereich der Bedienoberfläche, in oder an welchem der Zeiger liegt, auf der Anzeige vergrößert dargestellt wird und mindestens ein vergrößerter Funktionsbereich der Bedienoberfläche, welcher in dem vergrößerten Bereich der Bedienoberfläche liegt, mit dem Zeiger betätigt werden kann.

## Beschreibung

Die Erfindung betrifft ein Verfahren und eine Vorrichtung zum Darstellen und Bedienen einer Bedienoberfläche auf einer Anzeige, insbesondere zum Bedienen eines medizinischen Gerätes mittels eines Touch-Screens.

Bei der Bedienung von Softwareprogrammen wird meistens eine Bedienoberfläche verwendet, auf welcher unmittelbar oder zum Beispiel in einem zu öffnenden Fenster interaktive Bereiche angezeigt werden, welche mit einem Zeiger, der beispielsweise durch einen Finger auf einem Touch-Screen oder eine Maus geführt wird, angefahren werden können. Diese interaktiven Bereiche können anschließend durch ein Drücken des Touch-Screens oder eine Betätigung eines Schalters der Maus, einen so genannten Maus-Klick, aktiviert werden, um eine weitere Aktion auszuführen, wie zum Beispiel einen Druckvorgang zu initiieren oder ein neues Fenster zu öffnen.

Bei der Verwendung kleinerer Anzeigevorrichtungen, wie sie beispielsweise bei medizinischen Geräten verwendet werden, kann es aufgrund der verkleinerten Darstellung der interaktiven Bereiche zu Problemen bei der schnellen und sicheren Bedienung einer Software und damit bei einer Bedienung des medizinischen Gerätes kommen.

Es ist eine Aufgabe der vorliegenden Erfindung ein Verfahren und eine Vorrichtung vorzuschlagen, mit welchen eine grafische Benutzeroberfläche auch auf einem kleinen Bildschirm sicher und schnell bedient werden kann.

Diese Aufgabe wird durch die Gegenstände der unabhängigen Ansprüche gelöst. Vorteilhafte Ausführungsformen ergeben sich aus den abhängigen Ansprüchen.

Beim erfindungsgemäßen Verfahren zum Darstellen einer Bedienoberfläche auf einer Anzeige, wie zum Beispiel einem LCD-Bildschirm, der auch als Touch-Screen ausgebildet sein kann, kann ein Benutzer einen Zeiger (Pointer) auf der Anzeige bewegen oder ziehen. Dies kann zum Beispiel mittels eines Zeigerinstrumentes, wie zum Beispiel einer Maus, eines Touch-Pads, eines Joysticks oder anderen bekannten Instrumenten geschehen. Optional kann, wenn die Anzeige als Touch-Screen ausgebildet ist, der Zeiger auch unmittelbar mit dem Finger auf der Anzeige oder dem Display gezogen oder bewegt werden. Der Benutzer kann ein Aktivierungssignal zum Beispiel durch Drücken auf den Touch-Screen oder Betätigen einer Taste zum Beispiel einer Maus (Maus-Klick) eingeben, wobei erfindungsgemäß nach der Eingabe des Aktivierungssignals ein Bereich der Bedienoberfläche und bevorzugt ein Bereich der Bedienoberfläche, in oder an welchem der Zeiger liegt, auf der Anzeige vergrößert dargestellt wird. Mindestens ein interaktiver Bereich der Bedienoberfläche, welcher in dem vergrößerten Bereich der Bedienoberfläche liegt, kann mit dem Zeiger anschließend angefahren werden und der in dem vergrößerten Bereich liegende interaktive Bereich kann mit dem Zeiger zum Beispiel nach erneuter Eingabe eines Aktivierungssignals betätigt oder aktiviert werden.

Erfindungsgemäß kann also ein graphisches Benutzer-Interface oder ein Bereich des graphischen Benutzer-Interfaces vergrößert werden, nachdem eine vorgegebene Interaktion, wie zum Beispiel der Klick, in einem bestimmten Bereich des graphischen Benutzer-Interfaces ausgeführt wurde. Somit ist es möglich, dass kleinere Bedienelemente, wie zum Beispiel Knöpfe (Buttons) und interaktive Bereiche, welche ohne Vergrößerung nur ungenau oder schwierig anzusteuern sind, sicher und zuverlässig von einem Benutzer angesteuert werden können. Die Vergrößerung eines Bereiches, welcher Knöpfe und interaktive Bereiche enthält, ermöglicht es, dass zum Beispiel auch bei einem Touch-Screen mit kleinerer Abmessung Bedienoperationen sicher ausgeführt werden können und zum Beispiel einzelne auf der graphischen Benutzeroberfläche dargestellte kleine Menüpunkte nach einer einmaligen oder sogar mehrmaligen Vergrößerung eindeutig mit dem Zeiger sicher angefahren werden können.

Der Bereich der Bedienoberfläche, welcher nach Eingabe des Aktivierungssignals vergrößert wird, kann ein Bereich auf einer graphischen Benutzeroberfläche sein, welcher einen vorgegebenen Abstand von der Spitze des Zeigers zum Zeitpunkt der Eingabe des Aktivierungssignals hat. Beispielsweise kann ein Bereich vergrößert werden, welcher im Umkreis von 0 bis 100 Pixeln von der Zeigerspitze liegt. Ebenso ist es auch möglich, einen zum Beispiel vordefinierten rechteckigen Bereich um die Zeigerspitze herum zu vergrößern, wobei die Zeigerspitze zum Beispiel im Mittelpunkt oder an einer Ecke des zu vergrößernden Rechteckes oder Quadrates liegt. Weiterhin ist es möglich, dass der zu vergrößernde Bereich der Bedienoberfläche eine Funktionsgruppe oder -untergruppe der graphischen Anzeige umfasst, wie zum Beispiel eine Menü-Leiste, ein Teil einer Menü-Leiste, wie zum Beispiel ein Untermenü, oder ein oder mehrere Piktogramme (Icons), welche unter der Zeigerspitze oder in der Umgebung der Zeigerspitze liegen, wobei auch hier ein Abstand von der Zeigerspitze vorgegeben werden kann, um einen Bereich um den Zeiger zu definieren, innerhalb dessen alle Funktionsgruppen oder Icons vergrößert werden.

Der oder die Funktionsbereiche der Bedienoberfläche, welche in dem vergrößerten Bereich liegen und welche angesteuert oder angeklickt werden können, können Knöpfe (Buttons), Piktogramme, Symbole (Icons) oder auch interaktive Bereiche sein, wobei nach deren Ansteuerung oder Anklicken weitere Aktionen von der Software ausgeführt werden und zum Beispiel ein medizinisches Gerät bedient werden kann.

Die Vergrößerung des Bereichs der Bedienoberfläche kann temporär sein, also zeitlich begrenzt und zum Beispiel eine vorgegebene Zeitdauer von zum Beispiel 3, 5 oder 10 Sekunden anhalten. Nach der vorgegebenen Zeitdauer wird der vergrößerte Bereich der Bedienoberfläche automatisch wieder auf den Ausgangszustand verkleinert. Alternativ kann die Vergrößerung des Bereiches auch kontinuierlich sein, wobei der vergrößerte Bereich zum Beispiel nach Ausführen einer Aktion, wie zum Beispiel Anklicken eines Icons in dem vergrößerten Bereich, oder nach Anklicken eines Minimierungs-Icons, wieder verkleinert werden kann.

Die in einem noch nicht vergrößerten Bereich liegenden Icons, Buttons oder interaktiven Bereiche können auch für eine unmittelbare Bedienung vor der Vergrößerung des Bereichs gesperrt sein, das heißt, der Bereich muss zusammen mit dem zu aktivierenden Icon erst vergrößert werden, bevor der Icon oder Button zum Beispiel mittels des Mauszeigers aktiviert oder bedient werden kann. Hierdurch kann sichergestellt werden, dass bei mehreren zum Beispiel in einem Menü eng nebeneinander liegenden betätigbaren Bereichen kein Bereich versehentlich durch eine ungenaue Ansteuerung aktiviert wird, sondern erst nach der Vergrößerung des Bereiches und Anwahl des entsprechenden Menüpunktes nach der Vergrößerung. Vorzugsweise wird der interaktive Bereich bei Ansteuerung durch ein Aktivierungssignal, wie zum Beispiel einen Maus-Klick, ein- oder mehrmals vergrößert, bevor er bedient werden kann.

Vorzugsweise wird nach Eingabe eines Aktivierungssignals keine Vergrößerung der Bedienoberfläche oder eines Bereiches der Bedienoberfläche durchgeführt, wenn innerhalb eines vorgegebenen Bereichs um die Zeigerspitze keine interaktiven Bereiche, wie zum Beispiel Buttons oder Icons, liegen.

Die Erfindung bezieht sich weiterhin auf ein Computerprogramm, welches, wenn es in einen Computer geladen wird oder auf einem Computer läuft, ein wie oben beschriebenes Verfahren ausführt. Weiterhin bezieht sich die Erfindung auf ein Programmspeichermedium oder Computerprogrammprodukt mit einem solchen Programm.

Eine erfindungsgemäße Vorrichtung zum Darstellen einer Bedienoberfläche auf einer Anzeige weist außer der Anzeige ein Zeigerinstrument auf, mit welchem ein Benutzer einen Zeiger auf der Anzeige bewegen oder ziehen kann und weist eine mit der Anzeige gekoppelte Vergrößerungslogik auf, die nach Eingabe eines Aktivierungssignals durch die Anzeige (Touch-Screen) oder das Zeigerinstrument einen in Abhängigkeit von der Zeigerposition vergrößerten Teilbereich der gesamten Bedienoberfläche auf der Anzeige darstellt. Eine Eingabelogik ermöglicht das Erkennen der Position der Zeigerspitze und führt eine von einer Software vorgegebene Aktion aus, wenn die Zeigerspitze bei Eingabe eines Aktivierungssignals über einem vorgegebenen Funktionsbereich liegt.

Die erfindungsgemäße Vorrichtung weist als Anzeige vorzugsweise einen Touch-Screen auf, wobei zum Beispiel der Zeiger mittels eines Fingers auf dem Touch-Screen bewegt werden kann, so dass der Touch-Screen auch als Zeigerinstrument wirkt. Ein Aktivierungssignal kann zum Beispiel durch einmaliges, zweimaliges oder mehrmaliges tippen auf dem Touch-Screen erzeugt werden.

Vorzugsweise ist die erfindungsgemäße Vorrichtung mit einem medizinischen Gerät gekoppelt oder auf diesem angebracht und kann zur Ansteuerung des medizinischen Gerätes, wie zum Beispiel der Aktivierung des Gerätes, der Einstellung von Betriebsarten oder Parametern des medizinischen Gerätes, oder der Durchführung von Aktionen des medizinischen Gerätes, wie zum Beispiel dem Initiieren einer Röntgen-Sequenz bei einem Computertomographen, verwendet werden. Ebenso ist es möglich, dass die Vorrichtung der Bedienung einer im medizinischen Umfeld eingesetzte Software dient.

Da im medizinischen Umfeld und insbesondere im Operationssaal der Zugriff und die Bedienung von Software oft steril erfolgen müssen, wird vorzugsweise eine Touchscreen-Bedienung mit einer sterilen Abdeckung verwendet.

Die Erfindung wird nachfolgend anhand eines Ausführungsbeispiels beschrieben. Es zeigen:
- Figur 1: einen Touch-Screen mit einer graphischen Benutzeroberfläche im Ausgangszustand;
- Figur 2: die Benutzeroberfläche nach Eingabe eines Aktivierungssignals mit einem vergrößerten interaktiven Bereich; und
- Figur 3: den in Figur 2 gezeigten vergrößerten interaktiven Bereich, welcher nach der Bewegung des Zeigers auf den Bereich angesteuert werden kann.

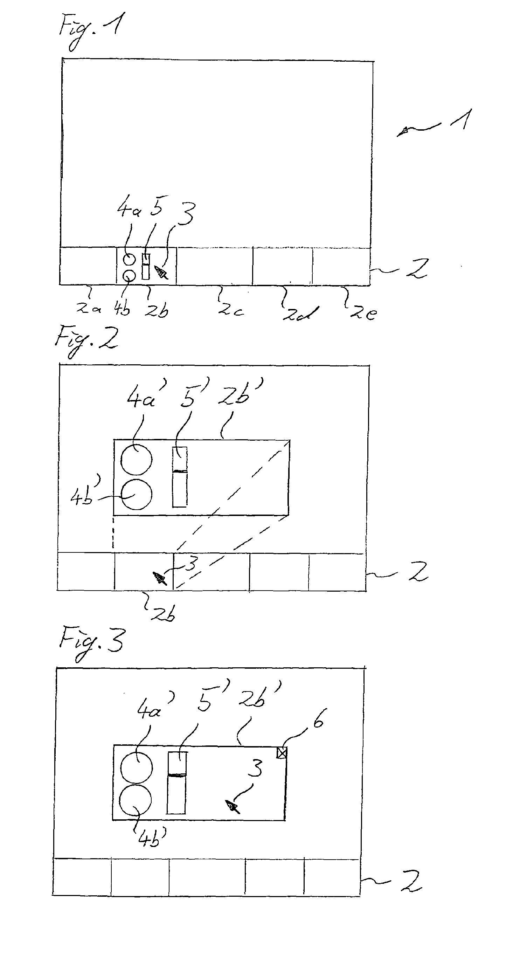

Figur 1 zeigt einen Touch-Screen 1, auf welchem zur Bedienung eines medizinischen Instrumentes eine graphische Bedienoberfläche dargestellt ist. Die Bedienoberfläche hat an ihrem unteren Bereich eine Menüleiste 2 mit einer Mehrzahl von interaktiven Bereichen 2a bis 2e, die in der in Figur 1 gezeigten verkleinerten Darstellung durch den Maus-Zeiger 3 nicht unmittelbar aktiviert werden können. Innerhalb eines jeden interaktiven Bereiches 2a bis 2e können ein oder mehrere interaktiv betätigbare Elemente, wie zum Beispiel Icons 4a, 4b oder eine Schiebeleiste 5 vorgesehen sein, mit welchen ein zum Beispiel medizinisches Gerät bedient werden kann.

Wird der Zeiger 3 auf einen der interaktiven Bereiche 2a bis 2e gezogen und ein Aktivierungssignal, zum Beispiel durch ein Drücken auf den Touch-Screen, an die Benutzeroberfläche übermittelt, so wird der interaktive Bereich 2d, in welchem sich die Spitze des Zeigers 3 befindet, vergrößert, wie in Figur 2 gezeigt. Dabei werden die in dem interaktiven Bereich 2d befindlichen anzuklickenden interaktiven Elemente 4a, 4b und 5 zusammen mit dem interaktiven Bereich vergrößert. In Figur 2, ist der vergrößerte interaktive Bereich 2d' zusammen mit den vergrößernden anzuklickenden Elementen 4a', 4b' und der vergrößerten Schiebeleiste 5' gezeigt.

Nach der Vergrößerung des interaktiven Bereiches 2b kann der Zeiger 3 in diesen vergrößerten Bereich 2b' hineinbewegt werden, um innerhalb dieses Bereiches eines der vergrößerten interaktiven Elemente 4a', 4b' oder 5' anzusteuern.

Nach dem Anklicken eines dieser interaktiven Elemente 4a', 4b' oder 5' kann der vergrößerte Bereich 2b' zum Beispiel automatisch wieder verkleinert werden. Alternativ kann auch ein Verkleinerungs-Icon 6 vorgesehen sein, um den vergrößerten Bereiche 2d' zum Beispiel nicht mehr anzuzeigen, so dass die Anzeige wieder wie in Figur 1 dargestellt konfiguriert ist.

Die Vergrößerung kann auch dazu verwendet werden, eine grafische Benutzeroberfläche (Graphical User Interface; GUI), die für eine Maus-Bedienung entwickelt wurde, auch über Touchscreen bedienbar zu machen. Dies ermöglicht dem Chirurgen beispielsweise einen sterilen Zugriff auf bestimme Softwareprogramme oder das Aufrufen von Patientendaten.

## Patentansprüche

1. Verfahren zum Darstellen und Bedienen einer Bedienoberfläche auf einer Anzeige (1), wobei ein Benutzer einen Zeiger (3) auf der Anzeige (1) ziehen oder bewegen kann und ein Aktivierungssignal eingeben kann, **dadurch gekennzeichnet, dass** nach Eingabe des Aktivierungssignals ein Bereich (2b) der Bedienoberfläche, in oder an welchem der Zeiger (3) liegt, auf der Anzeige (1) vergrößert dargestellt wird und mindestens ein vergrößerter Funktionsbereich (4a', 4b', 5') der Bedienoberfläche, welcher in dem vergrößerten Bereich (2b') der Bedienoberfläche liegt, mit dem Zeiger (3) betätigt werden kann.

2. Verfahren zum Darstellen und Bedienen einer Bedienoberfläche auf einer Anzeige (1) nach Anspruch 1, wobei das Aktivierungssignal ein Tastendruck, ein Maus-Klick oder ein Druck auf einen Touch-Screen ist.

3. Verfahren zum Darstellen und Bedienen einer Bedienoberfläche nach einem der vorhergehenden Ansprüche, wobei der Bereich der Bedienoberfläche, welcher nach Eingabe eines Aktivierungssignals vergrößert wird, ein Bereich mit einem vorgegebenen Abstand von einer Spitze des Zeigers (3) ist.

4. Verfahren zum Darstellen und Bedienen einer Bedienoberfläche nach einem der Ansprüche 1 oder 2, wobei der Bereich der Bedienoberfläche, welcher nach Eingabe des Aktivierungssignals vergrößert wird, eine Funktionsgruppe (2a bis 2e) der Bedienoberfläche oder ein Fenster ist.

5. Verfahren zum Darstellen und Bedienen einer Bedienoberfläche nach einem der vorhergehenden Ansprüche, wobei der mindestens eine vergrößerte Funktionsbereich (4a', 4b', 5') der Bedienoberfläche ein Icon, ein Piktogramm, ein Symbol, ein Knopf, ein Button oder ein interaktiver Bereich ist.

6. Verfahren zum Darstellen und Bedienen einer Bedienoberfläche auf einer Anzeige nach einem der vorhergehenden Ansprüche, wobei die Vergrößerung des Bereiches (2b) temporär ist oder durch eine Eingabe eines Aktivierungssignals beendet wird.

7. Verfahren zum Darstellen und Bedienen einer Bedienoberfläche auf einer Anzeige, wobei die Aktivierung des mindestens einen Funktionsbereiches (4a, 4b, 5) innerhalb des Bereiches (2b) vor der Vergrößerung des Bereiches (2b) gesperrt ist.

8. Computerprogramm welches, wenn es in einen Computer geladen ist oder auf einem Computer läuft, das Verfahren nach einem der vorhergehenden Ansprüche ausführt.

9. Programmspeichermedium oder Computerprogrammprodukt mit dem Programm nach dem vorhergehenden Anspruch.

10. Vorrichtung zum Darstellen und Bedienen einer Bedienoberfläche mit einer Anzeige (1); einem Zeigerinstrument, mit welchem ein Benutzer einen Zeiger (3) auf der Anzeige (1) bewegen oder ziehen kann; mit einer mit der Anzeige (1) gekoppelten Vergrößerungslogik, die nach Eingabe eines Aktivierungssignals einen in Abhängigkeit von der Zeigerposition vergrößerten Teilbereich (2b) der gesamten Bedienoberfläche auf der Anzeige (1) darstellt und mit einer Eingabelogik, welche die Position der Zeigerspitze erkennt und eine von einer Software vorgegebene Aktion ausführen kann, wenn die Zeigerspitze bei Eingabe eines Aktivierungssignals über einem vorgegebenen vergrößerten Funktionsbereich (4a', 4b', 5') des vergrößerten Teilbereichs (2b') liegt.

11. Vorrichtung nach dem vorhergehenden Anspruch, wobei die Anzeige (1) und das Zeigerinstrument ein Touch-Screen ist.

12. Medizinisches Gerät mit einer Vorrichtung nach einem der zwei vorhergehenden Ansprüche zur Ansteuerung oder Bedienung des medizinischen Gerätes.
